# EUROPÄISCHE PATENTANMELDUNG

(11) **EP 3 238 930 A1**
(43) Veröffentlichungstag der Anmeldung: **01.11.2017**
(21) Anmeldenummer: 17162383.8
(22) Anmeldetag: 22.03.2017
(51) Int. Cl.: B30B 11/08, B30B 15/30

(54) **RUNDLÄUFERPRESSE UND VERFAHREN ZUM EINRICHTEN UND/ODER BETREIBEN EINER RUNDLÄUFERPRESSE**

(30) Priorität: 29.03.2016 DE 102016105685
(71) Anmelder: Fette Compacting GmbH, 21493 Schwarzenbek (DE)
(72) Erfinder: Özcoban, Hüseyin, 22765 Hamburg (DE); Schmidt, Ingo, 21493 Schwarzenbek (DE); Seifert, Werner, 21465 Wentorf (DE); Dederichs, Matthias, 22393 Hamburg (DE)
(74) Vertreter: Hauck Patentanwaltspartnerschaft mbB

(57) **Zusammenfassung**

Die Erfindung betrifft eine Rundläuferpresse umfassend einen mittels eines Drehantriebs drehbaren Rotor, wobei der Rotor eine obere Stempelführung (10) für obere Pressstempel (12) und eine untere Stempelführung (14) für untere Pressstempel (16) sowie eine zwischen den Stempelführungen (10, 14) angeordnete Matrizenschreibe (18) aufweist, wobei die Pressstempel (12, 16) mit Kavitäten (20) der Matrizenscheibe (18) zusammenwirken, weiter umfassend eine Fülleinrichtung (24), in der zu verpressendes Füllmaterial (26) in die Kavitäten (20) der Matrizenscheibe (18) gefüllt wird, weiter umfassend mindestens eine obere Druckeinrichtung und mindestens eine untere Druckeinrichtung, die im Betrieb mit den oberen Pressstempeln (14) und mit den unteren Pressstempeln (16) zum Verpressen des Füllmaterials (26) in den Kavitäten (20) der Matrizenscheibe (18) zusammenwirken, und umfassend eine Auswurfeinrichtung (52), in der in den Kavitäten (20) erzeugte Presslinge aus der Rundläuferpresse ausgeworfen werden,dadurch gekennzeichnet, dass an oder in der Fülleinrichtung (24) mindestens eine Messeinrichtung (70) angeordnet ist zum Überwachen der Füllmaterialverfügbarkeit in der Fülleinrichtung (24). Die Erfindung betrifft außerdem ein Verfahren zum Einrichten und/oder Betreiben einer solchen Rundläuerpresse.

## Beschreibung

Die Erfindung betrifft eine Rundläuferpresse umfassend einen mittels eines Drehantriebs drehbaren Rotor, wobei der Rotor eine obere Stempelführung für obere Pressstempel und eine untere Stempelführung für untere Pressstempel sowie eine zwischen den Stempelführungen angeordnete Matrizenschreibe aufweist, wobei die Pressstempel mit Kavitäten der Matrizenscheibe zusammenwirken, weiter umfassend eine Fülleinrichtung, in der zu verpressendes Füllmaterial in die Kavitäten der Matrizenscheibe gefüllt wird, weiter umfassend mindestens eine obere Druckeinrichtung und mindestens eine untere Druckeinrichtung, die im Betrieb mit den oberen Pressstempeln und mit den unteren Pressstempeln zum Verpressen des Füllmaterials in den Kavitäten der Matrizenscheibe zusammenwirken, und umfassend eine Auswurfeinrichtung, in der in den Kavitäten erzeugte Presslinge aus der Rundläuferpresse ausgeworfen werden.

Die Erfindung betrifft außerdem ein Verfahren zum Einrichten und/oder Betreiben einer solchen Rundläuferpresse.

In Rundläuferpressen werden die Kavitäten der Matrizenscheibe mittels einer Fülleinrichtung mit dem zu verpressenden Füllmaterial befüllt, dosiert und/oder vorverdichtet. Anschließend wird in jeder Kavität durch die Ober- und Unterstempel ein Pressling erzeugt. Die Qualität der hergestellten Presslinge hängt signifikant von der Qualität der Befüllung der Kavitäten ab. Für eine reproduzierbare Presslingsqualität ist daher eine reproduzierbare Qualität der Kavitätenbefüllung Voraussetzung. Als Qualität der Kavitätenbefüllung kann zum Beispiel die Schwankungsbreite der Füllmengen von aufeinander folgenden Kavitäten und/oder die Dichteverteilung des Füllmaterials innerhalb einer einzelnen Kavität und/oder von aufeinander folgenden Kavitäten verstanden werden. Beispielsweise kann durch eine geringe Schwankungsbreite der Füllmengen ein gleichmäßiges Gewicht aller hergestellten Presslinge gewährleistet werden. Dies stellt ein wichtiges Qualitätsmerkmal nach dem Arzneibuch dar. Eine reproduzierbare Qualität der Kavitätenbefüllung setzt grundsätzlich voraus, dass bei der Befüllung stets ausreichend Füllmaterial zur Verfügung steht. Besonders während der Füllphase, in der die Kavitäten mit dem Füllmaterial befüllt, dosiert und/oder vorverdichtet werden, ist die Füllmaterialverfügbarkeit relevant.

Die Füllmaterialverfügbarkeit hängt auch von den Füllmaterialeigenschaften, wie Fließfähigkeit, Feuchte etc. ab. Während bei vielen Produkten die Kavitäten der Matrizenscheibe leicht überfüllt und dann präzise dosiert werden können, kann es beispielsweise bei schwer fließenden Pressmassen in der Fülleinrichtung zu einer Brückenbildung kommen, so dass die nachfließende Pressmasse nicht ausreichend Druck aufbaut.

All dies macht das Einrichten eines stabilen Prozesses anspruchsvoll und aufwendig. Bislang erfolgt dies auf Grundlage der Erfahrung des jeweiligen Maschineneinrichters. Der Einrichtvorgang ist entsprechend zeitaufwendig und aufgrund der Abhängigkeit von der persönlichen Erfahrung des Einrichters nicht immer sicher reproduzierbar. Auch Veränderungen im späteren Betrieb gegenüber dem Einrichtvorgang werden nicht immer zuverlässig erfasst.

Ausgehend von dem erläuterten Stand der Technik liegt der Erfindung daher die Aufgabe zugrunde, eine Rundläuferpresse und ein Verfahren der eingangs genannten Art bereitzustellen, mit denen in einfacher und sicher reproduzierbarer Weise eine optimale Befüllung der Kavitäten der Matrizenscheibe gewährleistet ist.

Die Erfindung löst die Aufgabe durch die unabhängigen Ansprüche 1 und 14. Vorteilhafte Ausgestaltungen finden sich in den abhängigen Ansprüchen, der Beschreibung und den Figuren.

Für eine Rundläuferpresse der eingangs genannten Art löst die Erfindung die Aufgabe dadurch, dass an oder in der Fülleinrichtung mindestens eine Messeinrichtung angeordnet ist zum Überwachen der Füllmaterialverfügbarkeit in der Fülleinrichtung.

Die erfindungsgemäße Rundläuferpresse besitzt in an sich bekannter Weise einen mittels eines Drehantriebs beispielsweise um eine vertikale Achse drehbaren Rotor. Der Rotor umfasst eine Matrizenscheibe, in der eine Vielzahl von entlang eines Teilkreises angeordneten Kavitäten vorgesehen ist. Jeweils ein Paar aus Oberstempel und Unterstempel ist einer Kavität der Matrizenscheibe zugeordnet und rotiert gemeinsam mit dieser. Im Zuge der Drehung werden die Oberstempel und Unterstempel in an sich bekannter Weise in axialer Richtung bewegt, beispielsweise durch Steuerkurven. Die Oberstempel des Rotors werden in der Oberstempelführung axial geführt und die Unterstempel des Rotors werden in der Unterstempelführung axial geführt. Die Matrizenscheibe der erfindungsgemäßen Rundläuferpresse kann einstückig ausgebildet sein oder aus Ringsegmenten zusammengesetzt sein. Die Kavitäten können durch unmittelbar in der Matrizenscheibe ausgebildete Bohrungen gebildet sein oder durch in die Matrizenscheibe eingesetzte lösbare Matrizen.

Durch die Fülleinrichtung werden die Kavitäten mit Füllmaterial befüllt. Das Füllmaterial kann pulverförmig sein. Die Fülleinrichtung kann beispielsweise eine oberhalb der Matrizenscheibe angeordnete Füllkammer, zum Beispiel in Form eines sogenannten Füllschuhs, umfassen, unter der die Matrizenscheibe hindurchdreht. Dabei fällt das Füllmaterial aus der Füllkammer schwerkraftbedingt in die Kavitäten. Durch die mindestens eine obere und untere Druckeinrichtung werden die Ober- und Unterstempel in den Kavitäten gegeneinander gepresst, wobei das Füllmaterial in den Kavitäten zu einem Pressling, insbesondere einer Tablette, verpresst wird. Anschließend werden die erzeugten Presslinge in der Regel durch die Unterstempel aus den Kavitäten ausgestoßen und von der Auswurfeinrichtung aus der Rundläuferpresse ausgeworfen. Dazu kann die Auswurfeinrichtung zum Beispiel einen oberhalb der Matrizenscheibe angeordneten Abstreifer umfassen, unter dem die Matrizenscheibe hindurchdreht und der die aus den Kavitäten ausgestoßenen Presslinge in einen Ablaufkanal abstreift. Dies ist an sich bekannt.

Erfindungsgemäß ist an oder in der Fülleinrichtung mindestens eine Messeinrichtung angeordnet, die die Füllmaterialverfügbarkeit in der Fülleinrichtung überwacht. Durch die mindestens eine Messeinrichtung kann die Füllmaterialverfügbarkeit für eine optimale, insbesondere gleichbleibende Befüllung der Kavitäten der Matrizenscheibe überwacht werden. Unter der Füllmaterialverfügbarkeit wird das ständige Vorhandensein ausreichenden Füllmaterials zur gleichförmigen Befüllung der Kavitäten verstanden. Insbesondere wird durch eine ausreichende Füllmaterialverfügbarkeit eine gleichförmige Befüllung der aufeinanderfolgenden Kavitäten der Matrizenscheibe sichergestellt, so dass die hergestellten Presslinge sich in ihren Eigenschaften, beispielsweise ihrem Presslingsgewicht oder der zur Erzeugung aufgewendeten Presskraft, so wenig wie möglich voneinander unterscheiden. Erfindungsgemäß können Messeinrichtungen an prozesskritischen Positionen der Fülleinrichtung, insbesondere der bzw. den Füllkammer(n) der Fülleinrichtung, in denen das Füllmaterial zur Befüllung der Kavitäten transportiert wird, die Füllmaterialverfügbarkeit erfassen. Somit kann gewährleistet werden, dass jederzeit ausreichend Füllmaterial zur Verfügung steht.

Außerdem können mithilfe der mindestens einen Messeinrichtung bereits beim Einrichten der Rundläuferpresse die optimalen Maschineneinstellungen auch unabhängig von der persönlichen Erfahrung einer Bedienperson ermittelt werden.

Während des anschließenden Produktionsbetriebs der Rundläuferpresse können etwaige Abweichungen von der erforderlichen Füllmaterialverfügbarkeit schnell und sicher detektiert werden. Indem erfindungsgemäß ein durch Messeinrichtungen unterstütztes und dadurch von der persönlichen Erfahrung einer Bedienperson weitgehend unabhängiges Einrichten der Presse erfolgen kann, werden die erforderliche Zeit und die erforderlichen Kosten reduziert. Durch die erfindungsgemäß ermöglichte ständige Überwachung der Füllmaterialverfügbarkeit während der Einrichtphase und im späteren Produktionsbetrieb der Rundläuferpresse ist eine optimale und gleichbleibende Qualität der Befüllung der Kavität der Matrizenscheibe und damit auch der erzeugten Presslinge gewährleistet.

Die mindestens eine Messeinrichtung kann insbesondere eine optische Messeinrichtung umfassen. Optische Messeinrichtungen zeichnen sich in diesem konkreten Anwendungsbereich durch eine hohe Praktikabilität bei geringen Kosten und sehr hoher Präzision aus. Es sind alternativ oder zusätzlich aber auch andere Messeinrichtungen denkbar, beispielsweise akustische Messeinrichtungen und/oder kapazitive Messeinrichtungen und/oder piezoelektrische Messeinrichtungen und/oder resistive Messeinrichtungen, wie Dehnungsmessstreifen, und/oder elektromagnetische Messeinrichtungen und/oder andere Druckmesseinrichtungen.

Die mindestens eine Messeinrichtung kann insbesondere mindestens eine Abstandsmesseinrichtung umfassen, die an geeigneter Stelle den Abstand zur Oberfläche des Füllmaterialbetts in der Fülleinrichtung misst und daraus den Füllstand ermittelt.

Nach einer weiteren Ausgestaltung kann mindestens eine Messeinrichtung in der Fülleinrichtung angeordnet sein und den Füllstand des Füllmaterials in einer unmittelbar oberhalb der Matrizenscheibe angeordneten Füllkammer der Fülleinrichtung messen. Es kann dann weiter vorgesehen sein, dass die mindestens eine Messeinrichtung eine in definierter Position in der Fülleinrichtung angeordnete optische Abstandsmesseinrichtung ist, wobei von der optischen Abstandsmesseinrichtung ausgesandte Messstrahlung auf die Oberfläche des Füllmaterials in der Füllkammer gerichtet ist, und wobei die optische Abstandsmesseinrichtung anhand von durch die Oberfläche des Füllmaterials reflektierter Messstrahlung den Abstand zu der Oberfläche des Füllmaterials misst und daraus den Füllstand des Füllmaterials in der Füllkammer ermittelt. Die Matrizenscheibe dreht im Betrieb unter der Füllkammer hindurch, wobei die Kavitäten durch eine Öffnung der Füllkammer schwerkraftbedingt befüllt werden. In dieser Füllkammer misst insbesondere die optische Abstandsmesseinrichtung ihren Abstand zu der Oberfläche des Füllmaterials und ermittelt daraus den Füllstand des Füllmaterials. Die optische Abstandsmesseinrichtung kann beispielsweise einen Laser umfassen. Dabei kann die Abstandsermittlung durch die in einer definierten Einbaulage in der Fülleinrichtung angeordnete optische Abstandsmesseinrichtung beispielsweise durch eine Laufzeitmessung der ausgesandten und nach Reflektion an der Oberfläche des Füllmaterials wieder empfangenen optischen Messstrahlung erfolgen. Es ist jedoch auch möglich, den Abstand aus einer Phasenverschiebung der an der Oberfläche des Materialbetts reflektierten Messstrahlung zu ermitteln oder den Abstand anhand der an der Oberfläche des Materialbetts reflektierten Messstrahlung mittels eines Triangulationsverfahrens zu bestimmen. Die von der optischen Abstandsmesseinrichtung in Richtung des Füllmaterials ausgesandte optische Messstrahlung kann beispielsweise senkrecht auf die Oberfläche des Füllmaterialbetts oder unter einem Winkel auf die Oberfläche des Füllmaterialbetts gerichtet sein. Die Abstandsmesseinrichtung kann den Abstand und damit die Höhe des Füllmaterialbetts in der Füllkammer zum Beispiel in regelmäßigen Abständen oder kontinuierlich umfassen.

Nach einer weiteren Ausgestaltung kann vorgesehen sein, dass in der Füllkammer der Fülleinrichtung mindestens ein drehend angetriebenes Rührflügelrad angeordnet ist, das im Betrieb der Rundläuferpresse in dem in der Füllkammer befindlichen Füllmaterial dreht, wobei die optische Abstandsmesseinrichtung oberhalb des mindestens einen Rührflügelrads angeordnet ist, so dass von der optischen Abstandsmesseinrichtung ausgesandte Messstrahlung zwischen den Rührflügeln des Rührflügelrads hindurch auf die Oberfläche des Füllmaterials gelangt und von der Oberfläche des Füllmaterials reflektierte Messstrahlung wieder zwischen den Rührflügeln des Rührflügelrads hindurch zurück zu der optischen Abstandsmesseinrichtung gelangt. Das Rührflügelrad besitzt mehrere Rührflügel. Es dreht in dem Materialbett aus Füllmaterial und sorgt so für einen guten Transport und eine gute Auflockerung des Füllmaterials. Dies ist an sich bekannt. Bei dieser Ausgestaltung wird die Messachse der Abstandsmesseinrichtung, entlang der die optische Messstrahlung ausgesandt wird, im Betrieb in regelmäßigen Abständen von Rührflügeln des Rührflügelrads unterbrochen. Die Abstandsmessung erfolgt bei dieser Ausgestaltung jeweils zwischen den Rührflügeln, also wenn die optische Messachse nicht von den Rührflügeln unterbrochen ist.

Mindestens eine weitere Messeinrichtung kann in der Fülleinrichtung angeordnet sein und den Füllstand des Füllmaterials in einer oberhalb oder seitlich der unmittelbar oberhalb der Matrizenscheibe angeordneten (ersten) Füllkammer der Fülleinrichtung angeordneten zweiten Füllkammer messen. Die zweite Füllkammer kann zum Beispiel auch seitlich versetzt oberhalb der ersten Füllkammer angeordnet sein. Natürlich könnte auch noch eine oberhalb und gegebenenfalls wiederum seitlich versetzt zu der zweiten Füllkammer angeordnete dritte Füllkammer vorgesehen sein. Auch weitere Füllkammern sind denkbar. In den Füllkammern, insbesondere der zweiten und/oder gegebenenfalls vorgesehenen weiteren Füllkammern, kann auch eine Vorverdichtung und/oder eine Dosierung des Füllmaterials, also ein Einstellen der Füllmenge, erfolgen.

Es kann dann wiederum vorgesehen sein, dass die mindestens eine weitere Messeinrichtung eine in definierter Position in der Fülleinrichtung angeordnete weitere optische Abstandsmesseinrichtung ist, wobei von der weiteren optischen Abstandsmesseinrichtung ausgesandte Messstrahlung auf die Oberfläche des Füllmaterials in der zweiten Füllkammer gerichtet ist, und wobei die weitere optische Abstandsmesseinrichtung anhand von durch die Oberfläche des Füllmaterials reflektierter Messstrahlung den Abstand zu der Oberfläche des Füllmaterials misst und daraus den Füllstand des Füllmaterials in der zweiten Füllkammer ermittelt.

Weiterhin kann wiederum vorgesehen sein, dass in der zweiten Füllkammer der Fülleinrichtung mindestens ein drehend angetriebenes Rührflügelrad angeordnet ist, das im Betrieb der Rundläuferpresse in dem in der zweiten Füllkammer befindlichen Füllmaterial dreht, wobei die weitere optische Abstandsmesseinrichtung oberhalb des mindestens einen Rührflügelrads angeordnet ist, so dass von der weiteren optischen Abstandsmesseinrichtung ausgesandte Messstrahlung zwischen den Rührflügeln des Rührflügelrads hindurch auf die Oberfläche des Füllmaterials gelangt und von der Oberfläche des Füllmaterials reflektierte Messstrahlung wieder zwischen den Rührflügeln des Rührflügelrads hindurch zurück zu der weiteren optischen Abstandsmesseinrichtung gelangt.

Die oben zu der den Füllstand des Füllmaterials in der ersten Füllkammer messenden Messeinrichtung erläuterten Ausgestaltungen können in entsprechender Weise auch hinsichtlich der den Füllstand in der zweiten Füllkammer messenden weiteren Messeinrichtung vorgesehen sein.

Nach einer weiteren Ausgestaltung kann mindestens eine Messeinrichtung vorgesehen sein, die den Füllstand des Füllmaterials in einem Zuführabschnitt der Fülleinrichtung misst. Durch den Zuführabschnitt wird das Füllmaterial einer zweiten Füllkammer und/oder einer ersten Füllkammer der Fülleinrichtung zugeführt. Die mindestens eine Messeinrichtung kann wiederum eine in definierter Position in der Fülleinrichtung angeordnete (weitere) optische Abstandsmesseinrichtung sein, wobei von der (weiteren) optischen Abstandsmesseinrichtung ausgesandte Messstrahlung auf die Oberfläche des Füllmaterials in dem Zuführabschnitt gerichtet ist, und wobei die (weitere) optische Abstandsmesseinrichtung anhand von durch die Oberfläche des Füllmaterials reflektierter Messstrahlung den Abstand zu der Oberfläche des Füllmaterials misst und daraus den Füllstand des Füllmaterials in den Zuführabschnitt ermittelt.

Die erfindungsgemäße Rundläuferpresse kann nach einer weiteren Ausgestaltung Anzeigemittel umfassen, die die Messdaten der mindestens einen Messeinrichtung während eines Einrichtvorgangs der Rundläuferpresse und/oder während des Produktionsbetriebs der Rundläuferpresse anzeigen. Die Anzeigemittel können ein entsprechendes Display umfassen. Auf diese Weise kann eine Bedienperson den Produktionsprozess überwachen. Es versteht sich, dass die Messdaten für die Anzeige durch die Anzeigemittel bereits aufbereitet sein können. So kann beispielsweise der Füllstand in der Fülleinrichtung, insbesondere in einem Zuführabschnitt und/oder in einer Füllkammer visualisiert werden. Bei Vorliegen unzulässiger Abweichungen von definierten Sollwerten kann ein Warnsignal ausgegeben werden, beispielsweise optisch und/oder akustisch. Auch kann die Rundläuferpresse gestoppt werden.

Die erfindungsgemäße Rundläuferpresse kann weiterhin eine Regeleinrichtung umfassen, an der die Messdaten der mindestens einen Messeinrichtung anliegen und die während eines Einrichtvorgangs der Rundläuferpresse und/oder während des Produktionsbetriebs der Rundläuferpresse auf Grundlage der Messdaten Betriebsparameter der Rundläuferpresse steuert. Die Regeleinrichtung kann die Betriebsparameter der Rundläuferpresse während eines Einrichtvorgangs der Rundläuferpresse und/oder während des Produktionsbetriebs der Rundläuferpresse insbesondere derart steuern, dass in der Fülleinrichtung eine Sollfüllmaterialmenge vorhanden ist.

Entsprechend löst die Erfindung die Aufgabe auch durch ein Verfahren zum Einrichten und/oder Betreiben einer erfindungsgemäßen Rundläuferpresse, bei dem während eines Einrichtvorgangs der Rundläuferpresse und/oder während des Produktionsbetriebs der Rundläuferpresse auf Grundlage von Messdaten der mindestens einen Messeinrichtung Betriebsparameter der Rundläuferpresse derart gesteuert werden, dass in der Fülleinrichtung eine Sollfüllmaterialmenge vorhanden ist.

Als Betriebsparameter kann die Regeleinrichtung beispielsweise die Drehzahl des Rotors und/oder die Drehzahl eines Rührflügelrads der Fülleinrichtung und/oder die Menge des der Fülleinrichtung zugeführten Füllmaterials steuern. Wie eingangs erläutert, wirkt sich auch die Rotordrehzahl auf die Füllmaterialverfügbarkeit aus.

Erfindungsgemäß kann auf Grundlage der Messdaten der mindestens einen Messeinrichtung insbesondere eine automatische Regelung erfolgen, so dass jederzeit die optimale Füllmaterialmenge verfügbar ist und somit ein stabiler Produktionsprozess mit reproduzierbar hochqualitativ erzeugten Presslingen gewährleistet ist. In der Regeleinrichtung können dazu geeignete computerunterstützte Regelalgorithmen implementiert sein. Auf diese Weise wird jederzeit und unabhängig von der persönlichen Erfahrung einer Bedienperson ein optimaler Produktionsprozess sichergestellt.

Ein Ausführungsbeispiel der Erfindung wird nachfolgend anhand von Figuren näher erläutert. Es zeigen schematisch:
- Fig. 1: eine erfindungsgemäße Rundläuferpresse in einer in die Zeichenebene abgewickelten Schnittansicht,
- Fig. 2: einen Teil der in Fig. 1 gezeigten Rundläuferpresse in einer Draufsicht, und
- Fig. 3: einen Teil der in Fig. 1 gezeigten Rundläuferpresse in einer Schnittansicht.

Soweit nichts anderes angegeben ist, bezeichnen in den Figuren gleiche Bezugszeichen gleiche Gegenstände.

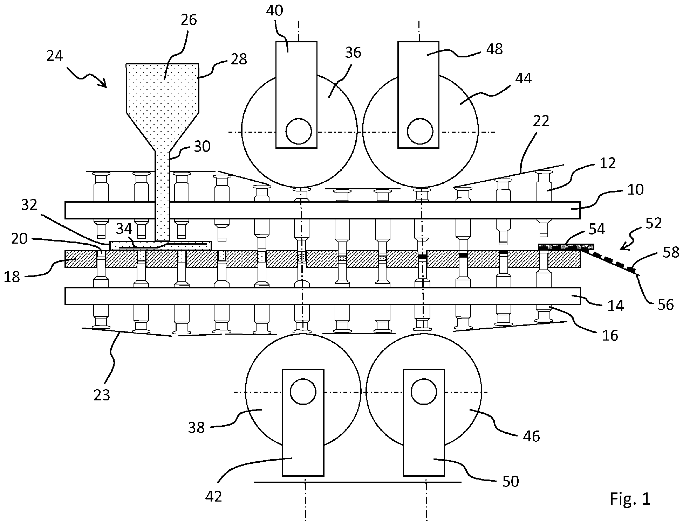

Die in Fig. 1 gezeigte Rundläuferpresse umfasst in an sich bekannter Weise einen mittels eines nicht näher dargestellten Drehantriebs beispielsweise um eine vertikale Achse drehbaren Rotor. Der Rotor umfasst eine obere Stempelführung 10 für eine Mehrzahl von oberen Pressstempeln 12 sowie eine untere Stempelführung 14 für eine Mehrzahl von unteren Pressstempeln 16. Der Rotor umfasst darüber hinaus eine Matrizenscheibe 18, in der eine Mehrzahl von Kavitäten 20 ausgebildet ist. Jeweils ein Paar aus oberem und unterem Pressstempel 12, 16 ist einer Kavität 20 der Matrizenscheibe 18 zugeordnet und rotiert gemeinsam mit der Matrizenscheibe 18. Im Zuge der Drehung werden die Oberstempel 12 und die Unterstempel 16 axial bewegt, insbesondere mittels oberer Steuerkurven 22 und unterer Steuerkurven 23. Die Rundläuferpresse umfasst weiterhin eine Fülleinrichtung 24, durch die in dem dargestellten Beispiel pulverförmiges Füllmaterial 26 den Kavitäten 20 der unter der Fülleinrichtung 24 hindurch drehenden Matrizenscheibe 18 zugeführt wird. Dazu umfasst die Fülleinrichtung 24 einen Zuführabschnitt mit einem Fülltrichter 28 und einem Zuführrohr 30, über die das Füllmaterial 26 einer in Form eines Füllschuhs ausgebildeten Füllkammer 32 zugeführt wird. In der Füllkammer 32 befindet sich in dem dargestellten Beispiel ein drehend angetriebenes Rührflügelrad 34. Natürlich könnten auch weitere Füllkammern vorgesehen sein, in denen sich gegebenenfalls ebenfalls ein Rührflügelrad dreht.

Die Rundläuferpresse umfasst darüber hinaus eine obere Vordruckeinrichtung mit einer oberen Vordruckrolle 36 und eine untere Vordruckeinrichtung mit einer unteren Vordruckrolle 38. Die obere Vordruckrolle 36 ist an einem oberen Druckrollenhalter 40 gelagert und die untere Vordruckrolle 38 ist an einem unteren Druckrollenhalter 42 gelagert. Weiterhin ist eine obere Hauptdruckeinrichtung mit einer oberen Hauptdruckrolle 44 und eine untere Hauptdruckeinrichtung mit einer unteren Hauptdruckrolle 46 vorgesehen. Die obere Hauptdruckrolle 44 ist wiederum an einem oberen Druckrollenhalter 48 gelagert und die untere Hauptdruckrolle 46 ist an einem unteren Druckrollenhalter 50 gelagert. Weiterhin umfasst die erfindungsgemäße Rundläuferpresse eine Auswurfeinrichtung 52 mit einem oberhalb der Matrizenscheibe 18 angeordneten Abstreifer 54 und einem Ablaufkanal 56.

Im Betrieb wird durch die Fülleinrichtung 24 in an sich bekannter Weise schwerkraftbedingt Füllmaterial 26 in die Bohrungen 20 der Matrizenscheibe 18 gefüllt. Die Unterseiten der Bohrungen 20 sind zu diesem Zeitpunkt durch die Unterstempel 16 verschlossen. Im Bereich der Vordruckrollen 36 und 38 erfolgt eine Vorverpressung des Füllmaterials 26 in den Kavitäten 20 durch die Ober- und Unterstempel 12, 16. Im Bereich der Hauptdruckrollen 44, 46 erfolgt die Hauptverpressung des Füllmaterials 26 in den Kavitäten 20 zu Presslingen 58, insbesondere Tabletten 58, durch die Ober- und Unterstempel 12, 16. Anschließend fahren die Oberstempel 12 aus den Kavitäten 20 heraus und die hergestellten Tabletten 58 werden durch die Unterstempel 16 aus den Kavitäten 20 ausgestoßen und durch den Abstreifer 54 dem Ablaufkanal 56 zugeführt.

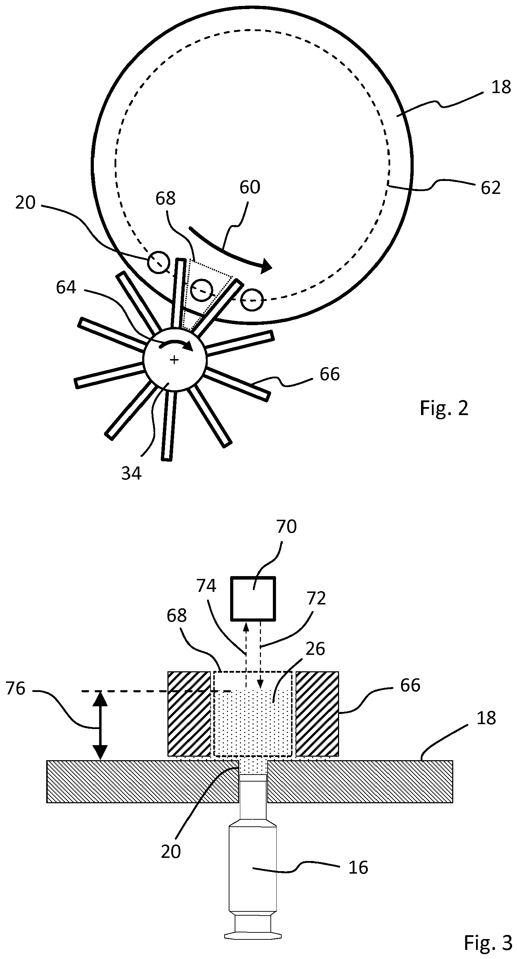

In der Draufsicht der Fig. 2 ist die Drehrichtung der Matrizenscheibe 18 durch den Pfeil 60 veranschaulicht. Der Teilkreis, auf dem die Kavitäten 20 der Matrizenscheibe 18 (von denen in Fig. 2 aus Veranschaulichungsgründen nur drei dargestellt sind) angeordnet sind, ist bei dem Bezugszeichen 62 gestrichelt dargestellt. In der Veranschaulichung der Fig. 2 ist das Rührflügelrad 34 der Fülleinrichtung 24 genauer zu erkennen. Zum einen ist durch den Pfeil 64 die Drehrichtung des Rührflügelrads 34 beispielhaft veranschaulicht. Die Drehrichtung 64 und/oder die Drehrichtung 60 könnten dabei grundsätzlich auch entgegengesetzt sein. Zum anderen ist bei dem Bezugszeichen 66 eine Mehrzahl von Rührflügeln des Rührflügelrads 34 erkennbar. In dem in den Figuren 2 und 3 bei dem Bezugszeichen 68 gestrichelt dargestellten Bereich erfolgt die Befüllung der Kavitäten 20 mit Füllmaterial 26.

Bei dem Bezugszeichen 70 ist in Fig. 3 eine erfindungsgemäße Messeinrichtung gezeigt. Bei der Messeinrichtung 70 handelt es sich in dem vorliegenden Beispiel um eine in definierter Position in der Fülleinrichtung 24 angeordnete optische Abstandsmesseinrichtung 70, beispielsweise eine Laserabstandsmesseinrichtung. Die Abstandsmesseinrichtung 70 sendet von oben optische Messstrahlung auf die Oberfläche des Füllmaterials 26 aus, wie in Fig. 3 bei dem Bezugszeichen 72 gezeigt. Die Messstrahlung wird von der Oberfläche des Füllmaterials 26 reflektiert und gelangt zurück zu der Abstandsmesseinrichtung 70, wie in Fig. 3 bei dem Bezugszeichen 74 gezeigt. Beispielsweise anhand einer Laufzeitmessung ermittelt die Abstandsmesseinrichtung 70 ihren Abstand zu der Oberfläche des Füllmaterials 26 und daraus den Füllstand 76 des Füllmaterials 26 in der Füllkammer 32 der Fülleinrichtung 24. Wie in Fig. 3 zu erkennen, ist die Abstandsmesseinrichtung 70 oberhalb des Rührflügelrads 34 angeordnet, so dass die von der Abstandsmesseinrichtung 70 ausgesandte Messstrahlung zwischen den den Messweg regelmäßig unterbrechenden Rührflügeln 66 hindurch auf die Oberfläche des Füllmaterials 26 gelangt und nach der Reflektion wieder zurück zu der Abstandsmesseinrichtung 70 gelangt.

Die Messdaten der Messeinrichtung 70 können einer nicht näher dargestellten Regeleinrichtung der Rundläuferpresse zugeführt werden. Die Regeleinrichtung kann auf Grundlage der Messdaten während eines Einrichtvorgangs der Rundläuferpresse und/oder während des Produktionsbetriebs der Rundläuferpresse Betriebsparameter der Rundläuferpresse derart steuern, dass in der Fülleinrichtung 24 eine Sollfüllmenge an Füllmaterial 26 jederzeit vorhanden ist. Dazu kann die Regeleinrichtung als Betriebsparameter beispielsweise die Drehzahl des Rotors der Rundläuferpresse und/oder die Drehzahl des Rührflügelrads 34 der Fülleinrichtung 24 ansteuern. Die Rundläuferpresse kann darüber hinaus nicht näher dargestellte Anzeigemittel umfassen, die die Messdaten der Messeinrichtung 70 während eines Einrichtvorgangs der Rundläuferpresse und/oder während des Produktionsbetriebs der Rundläuferpresse für eine Bedienperson anzeigen.

### Bezugszeichenliste

- 10: Obere Stempelführung
- 12: Obere Pressstempel
- 14: Untere Stempelführung
- 16: Untere Pressstempel
- 18: Matrizenscheibe
- 20: Kavitäten
- 22: Obere Steuerkurven
- 23: Untere Steuerkurven
- 24: Fülleinrichtung
- 26: Füllmaterial
- 28: Fülltrichter
- 30: Zuführrohr
- 32: Füllkammer
- 34: Rührflügelrad
- 36: Obere Vordruckrolle
- 38: Untere Vordruckrolle
- 40: Oberer Druckrollenhalter
- 42: Unterer Druckrollenhalter
- 44: Obere Hauptdruckrolle
- 46: Untere Hauptdruckrolle
- 48: Oberer Druckrollenhalter
- 50: Unterer Druckrollenhalter
- 52: Auswurfeinrichtung
- 54: Abstreifer
- 56: Ablaufkanal
- 58: Presslinge, Tabletten
- 60: Pfeil
- 62: Teilkreis
- 64: Pfeil
- 66: Rührflügel
- 68: Bereich
- 70: Abstandsmesseinrichtung
- 72: Messstrahlung
- 74: Messstrahlung

## Patentansprüche

1. Rundläuferpresse umfassend einen mittels eines Drehantriebs drehbaren Rotor, wobei der Rotor eine obere Stempelführung (10) für obere Pressstempel (12) und eine untere Stempelführung (14) für untere Pressstempel (16) sowie eine zwischen den Stempelführungen (10, 14) angeordnete Matrizenschreibe (18) aufweist, wobei die Pressstempel (12, 16) mit Kavitäten (20) der Matrizenscheibe (18) zusammenwirken, weiter umfassend eine Fülleinrichtung (24), in der zu verpressendes Füllmaterial (26) in die Kavitäten (20) der Matrizenscheibe (18) gefüllt wird, weiter umfassend mindestens eine obere Druckeinrichtung und mindestens eine untere Druckeinrichtung, die im Betrieb mit den oberen Pressstempeln (14) und mit den unteren Pressstempeln (16) zum Verpressen des Füllmaterials (26) in den Kavitäten (20) der Matrizenscheibe (18) zusammenwirken, und umfassend eine Auswurfeinrichtung (52), in der in den Kavitäten (20) erzeugte Presslinge aus der Rundläuferpresse ausgeworfen werden, **dadurch gekennzeichnet, dass** an oder in der Fülleinrichtung (24) mindestens eine Messeinrichtung (70) angeordnet ist zum Überwachen der Füllmaterialverfügbarkeit in der Fülleinrichtung (24).

2. Rundläuferpresse nach einem der vorhergehenden Ansprüche, **dadurch gekennzeichnet, dass** die mindestens eine Messeinrichtung (70) eine optische Messeinrichtung umfasst.

3. Rundläuferpresse nach einem der vorhergehenden Ansprüche, **dadurch gekennzeichnet, dass** mindestens eine Messeinrichtung (70) in der Fülleinrichtung (24) angeordnet ist und den Füllstand des Füllmaterials (26) in einer unmittelbar oberhalb der Matrizenscheibe (18) angeordneten Füllkammer (32) der Fülleinrichtung (24) misst.

4. Rundläuferpresse nach Anspruch 3, **dadurch gekennzeichnet, dass** die mindestens eine Messeinrichtung (70) eine in definierter Position in der Fülleinrichtung (24) angeordnete optische Abstandsmesseinrichtung (70) ist, wobei von der optischen Abstandsmesseinrichtung (70) ausgesandte Messstrahlung auf die Oberfläche des Füllmaterials (26) in der Füllkammer (32) gerichtet ist, und wobei die optische Abstandsmesseinrichtung (70) anhand von durch die Oberfläche des Füllmaterials (26) reflektierter Messstrahlung den Abstand zu der Oberfläche des Füllmaterials (26) misst und daraus den Füllstand des Füllmaterials (26) in der Füllkammer (32) ermittelt.

5. Rundläuferpresse nach Anspruch 4, **dadurch gekennzeichnet, dass** in der Füllkammer (32) der Fülleinrichtung (24) mindestens ein drehend angetriebenes Rührflügelrad (34) angeordnet ist, das im Betrieb der Rundläuferpresse in dem in der Füllkammer (32) befindlichen Füllmaterial (26) dreht, wobei die optische Abstandsmesseinrichtung (70) oberhalb des mindestens einen Rührflügelrads (34) angeordnet ist, so dass von der optischen Abstandsmesseinrichtung (70) ausgesandte Messstrahlung zwischen den Rührflügeln (66) des Rührflügelrads (34) hindurch auf die Oberfläche des Füllmaterials (26) gelangt und von der Oberfläche des Füllmaterials (26) reflektierte Messstrahlung wieder zwischen den Rührflügeln (66) des Rührflügelrads (34) hindurch zurück zu der optischen Abstandsmesseinrichtung (70) gelangt.

6. Rundläuferpresse nach einem der Ansprüche 3 bis 5, **dadurch gekennzeichnet, dass** mindestens eine weitere Messeinrichtung in der Fülleinrichtung (24) angeordnet ist und den Füllstand des Füllmaterials (26) in einer oberhalb oder seitlich der Füllkammer (32) der Fülleinrichtung (24) angeordneten zweiten Füllkammer misst.

7. Rundläuferpresse nach Anspruch 6, **dadurch gekennzeichnet, dass** die mindestens eine weitere Messeinrichtung eine in definierter Position in der Fülleinrichtung (24) angeordnete weitere optische Abstandsmesseinrichtung ist, wobei von der weiteren optischen Abstandsmesseinrichtung ausgesandte Messstrahlung auf die Oberfläche des Füllmaterials (26) in der zweiten Füllkammer gerichtet ist, und wobei die weitere optische Abstandsmesseinrichtung anhand von durch die Oberfläche des Füllmaterials (26) reflektierter Messstrahlung den Abstand zu der Oberfläche des Füllmaterials (26) misst und daraus den Füllstand des Füllmaterials (26) in der zweiten Füllkammer ermittelt.

8. Rundläuferpresse nach Anspruch 7, **dadurch gekennzeichnet, dass** in der zweiten Füllkammer der Fülleinrichtung (24) mindestens ein drehend angetriebenes Rührflügelrad angeordnet ist, das im Betrieb der Rundläuferpresse in dem in der zweiten Füllkammer befindlichen Füllmaterial (26) dreht, wobei die weitere optische Abstandsmesseinrichtung oberhalb des mindestens einen Rührflügelrads angeordnet ist, so dass von der weiteren optischen Abstandsmesseinrichtung ausgesandte Messstrahlung zwischen den Rührflügeln des Rührflügelrads hindurch auf die Oberfläche des Füllmaterials (26) gelangt und von der Oberfläche des Füllmaterials (26) reflektierte Messstrahlung wieder zwischen den Rührflügeln des Rührflügelrads hindurch zurück zu der weiteren optischen Abstandsmesseinrichtung gelangt.

9. Rundläuferpresse nach einem der vorhergehenden Ansprüche, **dadurch gekennzeichnet, dass** mindestens eine Messeinrichtung vorgesehen ist, die den Füllstand des Füllmaterials (26) in einem Zuführabschnitt der Fülleinrichtung (24) misst, durch den Füllmaterial (26) einer Füllkammer (32) der Fülleinrichtung (24) zugeführt wird.

10. Rundläuferpresse nach einem der vorhergehenden Ansprüche, **dadurch gekennzeichnet, dass** sie Anzeigemittel umfasst, die die Messdaten der mindestens einen Messeinrichtung (70) während eines Einrichtvorgangs der Rundläuferpresse und/oder während des Produktionsbetriebs der Rundläuferpresse anzeigen.

11. Rundläuferpresse nach einem der vorhergehenden Ansprüche, **dadurch gekennzeichnet, dass** sie weiterhin eine Regeleinrichtung umfasst, an der die Messdaten der mindestens einen Messeinrichtung (70) anliegen, und die während eines Einrichtvorgangs der Rundläuferpresse und/oder während des Produktionsbetriebs der Rundläuferpresse auf Grundlage der Messdaten Betriebsparameter der Rundläuferpresse steuert.

12. Rundläuferpresse nach Anspruch 11, **dadurch gekennzeichnet, dass** die Regeleinrichtung die Betriebsparameter der Rundläuferpresse während eines Einrichtvorgangs der Rundläuferpresse und/oder während des Produktionsbetriebs der Rundläuferpresse derart steuert, dass in der Fülleinrichtung (24) eine Sollfüllmaterialverfügbarkeit gegeben ist.

13. Rundläuferpresse nach einem der Ansprüche 11 oder 12, **dadurch gekennzeichnet, dass** die Regeleinrichtung als Betriebsparameter der Rundläuferpresse die Drehzahl des Rotors und/oder die Drehzahl eines Rührflügelrads (34) der Fülleinrichtung (24) und/oder die Menge des der Fülleinrichtung (24) zugeführten Füllmaterials (26) steuert.

14. Verfahren zum Einrichten und/oder Betreiben einer Rundläuferpresse nach einem der vorhergehenden Ansprüche, **dadurch gekennzeichnet, dass** während eines Einrichtvorgangs der Rundläuferpresse und/oder während des Produktionsbetriebs der Rundläuferpresse auf Grundlage von Messdaten der mindestens einen Messeinrichtung (70) Betriebsparameter der Rundläuferpresse derart gesteuert werden, dass in der Fülleinrichtung (24) eine Sollfüllmaterialverfügbarkeit gegeben ist.

15. Verfahren nach Anspruch 14, **dadurch gekennzeichnet, dass** als Betriebsparameter der Rundläuferpresse die Drehzahl des Rotors und/oder die Drehzahl eines Rührflügelrads (34) der Fülleinrichtung (24) und/oder die Menge des der Fülleinrichtung (24) zugeführten Füllmaterials (26) gesteuert werden.
